(19) Europäisches Patentamt
European Patent Office
Office européen des brevets

(11) EP 0 846 131 B1

(12) **EUROPÄISCHE PATENTSCHRIFT**

(45) Veröffentlichungstag und Bekanntmachung des Hinweises auf die Patenterteilung:
**24.01.2001 Patentblatt 2001/04**

(21) Anmeldenummer: **96927701.1**

(22) Anmeldetag: **07.08.1996**

(51) Int Cl.[7]: **C08F 10/00**, C08F 4/78, C08F 4/60, C08F 4/24

(86) Internationale Anmeldenummer:
**PCT/EP96/03492**

(87) Internationale Veröffentlichungsnummer:
**WO 97/08213 (06.03.1997 Gazette 1997/11)**

# (54) POLYMERISATE DES ETHYLENS MIT HOHER SPANNUNGSRISSBESTÄNDIGKEIT UND KATALYSATORSYSTEM FÜR DEREN HERSTELLUNG

POLYMERISATES OF ETHYLENE WITH A HIGH DEGREE OF RESISTANCE TO STRESS CRACK, AND A CATALYST SYSTEM FOR THE PRODUCTION THEREOF

POLYMERES D'ETHYLENE PRESENTANT UNE RESISTANCE ELEVEE A LA FISSURATION SOUS CONTRAINTE ET SYSTEME CATALYSEUR POUR LEUR PRODUCTION

(84) Benannte Vertragsstaaten:
**AT BE CH DE DK ES FI FR GB IE IT LI NL PT SE**

(30) Priorität: **22.08.1995 DE 19530766**

(43) Veröffentlichungstag der Anmeldung:
**10.06.1998 Patentblatt 1998/24**

(73) Patentinhaber: **BASF AKTIENGESELLSCHAFT**
**67056 Ludwigshafen (DE)**

(72) Erfinder:
- **ROHDE, Wolfgang**
  **D-67346 Speyer (DE)**
- **SAIVE, Roland**
  **D-67071 Ludwigshafen (DE)**
- **LILGE, Dieter**
  **D-67117 Limburgerhof (DE)**
- **LUX, Martin**
  **D-67125 Dannstadt-Schauernheim (DE)**
- **BAUER, Peter**
  **D-67071 Ludwigshafen (DE)**

(56) Entgegenhaltungen:
**EP-A- 0 090 374**
**EP-A- 0 339 571**
**WO-A-96/21684**
**AU-A- 544 693**
**US-A- 5 399 622**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 846 131 B1

## Beschreibung

Die vorliegende Erfindung betrifft Polymerisate des Ethylens, erhältlich durch Polymerisation von Ethylen und gegebenenfalls weiterer Comonomerer in Gegenwart eines Katalysatorsystems enthaltend als aktive Bestandteile

I) einen Phillips-Katalysator,

II) einen von I) unterschiedlichen Feststoff, enthaltend eine Komponente, die von den Metallocenkomplexen der allgemeinen Formel (A) abgeleitet ist, in welcher die Substituenten und Indizes die folgende Bedeutung haben:

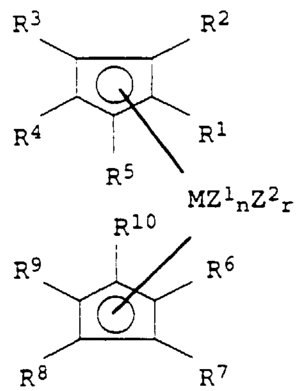

(A)

| | |
|---|---|
| $R^1$ bis $R^{10}$ | Wasserstoff, $C_1$- bis $C_{10}$-Alkyl, 5- bis 7-gliedriges Cycloalkyl, das seinerseits $C_1$- bis $C_6$-Alkylgruppen als Substituenten tragen kann, $C_6$- bis $C_{15}$-Aryl oder Arylalkyl und wobei gegebenenfalls auch zwei benachbarte Reste gemeinsam für 4 bis 15 C-Atome aufweisende cyclische Gruppen stehen können, oder $Si(R^{11})_3$, |
| mit $R^{11}$ | $C_1$- bis $C_{10}$-Alkyl, $C_6$- bis $C_{15}$-Aryl oder $C_3$- bis $C_{10}$-Cycloalkyl, |

oder wobei die Reste $R^4$ und $R^9$ gemeinsam eine Gruppierung $-[Y(R^{12}R^{13}]_m-$ bilden,

| | |
|---|---|
| mit Y $R^{12}$, $R^{13}$ | Silicium, Germanium, Zinn oder Kohlenstoff Wasserstoff, $C_1$- bis $C_{10}$-Alkyl, $C_3$- bis $C_{10}$-Cycloalkyl oder $C_6$- bis $C_{15}$-Aryl |
| M | für ein Metall der IV. bis VIII. Nebengruppe oder ein Metall der Lanthanidenreihe steht, |
| $Z^1$, $Z^2$ | Fluor, Chlor, Brom, Jod, Wasserstoff, $C_1$- bis $C_{20}$-Alkyl- oder Arylrest, $-OR^{14}$, $-OOCR^{14}$, |

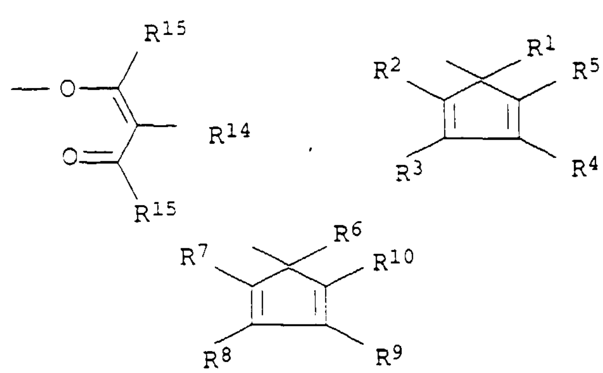

oder bedeutet,

| | |
|---|---|
| mit $R^{14}$ | Wasserstoff oder $C_1$- bis $C_{20}$-Alkyl, |
| $R^{15}$ | $C_1$- bis $C_{20}$-Alkyl, |
| m | 1,2,3 oder 4 |

n 0,1 oder 2
r 0, 1 oder 2,

wobei die Summe n + r ebenfalls 0,1 oder 2 ist
und gegebenenfalls

III) eine Organometallkomponente ausgewählt aus den Gruppen IA, IIA, IIB und IIIA des Periodensystems der Elemente.

Weiterhin betrifft die Erfindung Katalysatorsysteme, die für die Polymerisation von Ethylen und gegebenenfalls weiterer Comonomerer geeignet sind, ein Verfahren zur Herstellung der Polymerisate des Ethylens und die Verwendung der Polymerisate des Ethylens zur Herstellung von Folien, Formkörpern und Fasern sowie die Folien, Formkörper und Fasern.

Formkörper und Folien werden häufig aus Polyethylen hergestellt. Polyethylen-Formkörper werden zum Beispiel als Kunststoffkraftstoffbehälter (Tanks), Behälter für den Gefahrguttransport oder Druckrohre für Gas und Wasser verwendet. Bei diesen Anwendungen sollen die Formteile unter Spannung nicht reißen oder mit anderen Worten ihre Spannungsrißbeständigkeit sollte möglichst hoch sein. Zusätzlich sollten sich die Körper unter äußerer Krafteinwirkung wenig verformen, das bedeutet, daß ihre Steifigkeit möglichst groß sein sollte.

Ethylenpolymerisate deren Verarbeitung zu Formkörpern mit relativ hoher Spannungsrißbeständigkeit und relativ hoher Steifigkeit führen, können, wie in den EP-A 0 533 155 und EP-A 0 533 156 beschrieben, durch Mischen von Ethylenpolymerisaten, die einerseits mit Ziegler-Katalysatoren und andererseits mit Phillips-Katalysatoren hergestellt wurden, erhalten werden. Dieses Verfahren ist jedoch aufwendig, weil man jede Polymerkomponente für sich mit unterschiedlichen Katalysatoren in getrennten Reaktoren herstellen und in einem separaten Schritt mischen muß.

WO-A 92/17511 beschreibt die Polymerisation von Ethylen in Gegenwart zweier, durch das Porenvolumen sich unterscheidende Phillips-Katalysatoren. Die Eigenschaften der hierbei erhaltenen Polymerisate lassen aber zu wünschen übrig. Dies trifft insbesondere für die Relation von Steifigkeit und Spannungsrißbeständigkeit der aus ihnen hergestellten Formkörper zu.

Aus der EP-A-0 339 571 ist es bekannt, zur Herstellung von Ethylen(Co)polymerisaten mit breiter Molekulargewichtsverteilung und hoher Schmelzfestigkeit die Polymerisation in Gegenwart eines Katalysators durchzuführen, der (A) einen Phillips-Katalysator, (B) eine Übergangsmetallverbindung mit einem Liganden mit einem konjugierten $\pi$-Elektronensystem und (C) einem Aluminoxan umfaßt. Der Einsatz eines Katalysatorsystems mit zwei unterschiedlichen, festen, polymerisationsaktiven Katalysator-Komponenten, von denen die eine ein Phillips-Katalysator ist und die andere einen Metallocenkomplex enthält, ist dieser Druckschrift nicht zu entnehmen. Es findet sich hierin auch kein Hinweis wie sich Ethylenpolymerisate herstellen lassen, die zu Formkörpern mit gleichzeitig guter Spannungsrissbeständigkeit und hoher Steifigkeit verarbeitbar sind.

Der vorliegenden Erfindung lag daher die Bereitstellung neuer Ethylenpolymerisate zugrunde, welche die genannten Nachteile nicht oder nur in geringem Maße aufweisen und die zur Herstellung von Formkörpern mit guter Spannungsrißbeständigkeit und hoher Steifigkeit geeignet sind.

Demgemäß wurden die eingangs definierten Ethylenpolymerisate und Katalysatorsysteme gefunden. Außerdem wurde ein Verfahren zur Herstellung der Ethylenpolymerisate sowie die Verwendung der Ethylenpolymerisate zur Herstellung von Folien Formkörpern und Fasern sowie die Folien, Formkörper und Fasern gefunden.

Die erfindungsgemäßen Polymerisate des Ethylens haben üblicherweise eine Dichte, gemessen nach DIN 53479, im Bereich von 0,925 bis 0,965 g/cm$^3$, vorzugsweise im Bereich von 0,945 bis 0,955 g/cm$^3$ und eine Schmelzflußrate (Melt Flow Rate, MFR), gemessen nach DIN 53735 unter unterschiedlichen Belastungsgewichten (in Klammern), im Bereich von 0,0 (190°C/21,6 kg) bis 200 (190°C/2,16 kg) g/10 min, vorzugsweise im Bereich von 2,0 (190°C/21,6 kg) bis 50 (190°C/21,6 kg) g/10 min.

Das Gewichtsmittel des Molekulargewichts Mw liegt im allgemeinen im Bereich von 10000 bis 7000000, vorzugsweise im Bereich von 20000 bis 1000000. Die Molgewichtsverteilung Mw/Mn, gemessen mit der Methode der GPC (Gelpermeationschromatographie) bei 135°C in 1,2,4-Trichlorbenzol gegen Polyethylenstandard, liegt üblicherweise im Bereich von 3 bis 300, vorzugsweise im Bereich von 8 bis 30.

Im allgemeinen werden die im Reaktor erzeugten Polymerisate des Ethylens in einem Extruder aufgeschmolzen und homogenisiert. Die Schmelzflußrate und die Dichte des Extrudats können sich dann von den entsprechenden Größen des Rohpolymerisats unterscheiden, liegen aber weiterhin im erfindungsgemäßen Bereich.

Die erfindungsgemäßen Katalysatorsysteme bestehen aus einer Mischung der festen Komponenten I) und II) unterschiedlichen Typs, die getrennt hergestellt werden können und gegebenenfalls metallorganischen Verbindungen III) der ersten (IA), zweiten (IIA) und dritten (IIIA) Hauptgruppe oder der zweiten (IIB) Nebengruppe des Periodensystems der Elemente, welche in der Regel als Aktivatoren fungieren. Es können auch Mischungen der metallorganischen Verbindungen III) verwendet werden.

Zur Herstellung der Feststoffkomponenten I) und II) wird im allgemeinen ein Trägermaterial mit einer oder mit mehreren, das entsprechende Übergangsmetall enthaltenden Verbindung(en), in Berührung gebracht.

Das Trägermaterial ist üblicherweise ein poröser anorganischer Feststoff der noch Hydroxygruppen enthalten kann. Beispiele für diese Feststoffe, die im übrigen dem Fachmann bekannt sind, sind Aluminiumoxid, Siliziumdioxid (Silicagel), Titandioxid oder deren Mischoxide, oder Aluminiumphosphat. Weitere geeignete Trägermaterialien können durch Modifizierung der Porenoberfläche mit Verbindungen der Elemente Bor (BE-A-61,275), Aluminium (US 4,284,5,27), Silizium (EP-A 0 166 157), Phosphor (DE-A 36 35 715) oder Titan erhalten werden. Das Trägermaterial kann unter oxidierenden oder nicht-oxidierenden Bedingungen bei Temperaturen von 200 bis 1000°C, gegebenenfalls in Gegenwart von Fluorierungsmitteln, wie beispielsweise Ammoniumhexafluorosilikat, behandelt werden.

Die polymerisationsaktive Komponente des Typs I) ist ein üblicher, dem Fachmann bekannter, Phillips-Katalysator dessen Herstellung beispielsweise in DE-A 25 40 279 oder DE-A 39 38 723 beschrieben wird. Vereinfachend dargestellt wird er im allgemeinen durch Tränken einer Trägersubstanz, beispielsweise Silicagel, mit einer chromhaltigen Lösung, Verdampfen des Lösungsmittels und Erhitzen des Feststoffs unter oxidierenden Bedingungen, beispielsweise in einer sauerstoffhaltigen Atmosphäre, auf 400 bis 1000°C erhalten. Dieser Aktivierung kann eine Reduktion folgen die beispielsweise durch Behandeln des chromhaltigen Feststoffs mit Kohlenmonoxid bei einer Temperatur im Bereich von 20 bis 800°C durchgeführt werden kann. Das Herstellungsverfahren für I) enthält somit in der Regel mindestens einen oxidierenden Schritt.

Die polymerisationsaktive Komponente II) der erfindungsgemäßen Katalysatorsysteme unterscheidet sich von der Komponente I) unter anderem dadurch, daß bei der Herstellung von II) im allgemeinen eine metallorganische Verbindung eines Übergangsmetalls auf eine Trägersubstanz aufgebracht wird und die anschließende Behandlung des Feststoffs unter oxidierenden Bedingungen entfällt. Die Trägersubstanz kann vor der Behandlung mit der Organoübergangsmetallverbindung bei einer Temperatur im Bereich von 50 bis 1000°C calciniert werden. Auch können auf die Trägermaterialien metallorganische Verbindungen III), vorzugsweise Aluminiumalkyle mit 1 bis 10 Kohlenstoff-Atomen, insbesondere Trimethylaluminium, Triethylaluminium oder Aluminoxane, aufgetragen werden.

Zur Herstellung der Komponente II) wird im allgemeinen ein Metallkomplex der allgemeinen Formel (A) in einem Lösungsmittel, wie beispielsweise einem aliphatischen oder aromatischen Kohlenwasserstoff oder einem Ether, gelöst und mit dem Trägermaterial gemischt. Vorzugsweise können Hexan, Heptan, Toluol, Ethylbenzol, Tetrahydrofuran oder Diethylether als Lösungsmittel und Silicagel, Aluminiumoxid oder Aluminiumphosphat, als Trägermaterial verwendet werden.

Von der entstandenen Suspension wird das Lösungsmittel, üblicherweise durch Verdampfen, entfernt.

Es ist auch möglich den Metallkomplex (A) vor dem Kontakt mit dem Trägermaterial mit einer oder mehreren metallorganischen Verbindungen der Komponente III), insbesondere $C_1$- bis $C_4$-Aluminiumtrialkylen, wie Trimethylaluminium, Triethylaluminium oder auch mit Methylaluminoxan, zu mischen und die Mischung dann mit dem Trägermaterial in Berührung zu bringen.

Weiterhin können geeignete Komplexe (A) aus der Gasphase durch Sublimation auf dem Trägermaterial abgeschieden werden. Hierzu werden in der Regel die Komplexe (A) mit dem Trägermaterial, beispielsweise Silicagel, Aluminiumoxid oder Aluminiumphosphat, gemischt und bei einem Druck im Bereich von 0,00001 bis 100 kPa, auf eine Temperatur im Bereich von 0 bis 200°C erhitzt. Vorzugsweise kann man für dieses Verfahren chromhaltige Komplexe (A) und insbesondere unsubstituierte oder substituierte Bis-(cyclopentadienyl)chromverbindungen verwenden.

Der Gehalt an Übergangsmetall in der Komponente II) liegt im allgemeinen im Bereich von 1 bis 1000 µmol Übergangsmetall/g Feststoff, vorzugsweise im Bereich von 10 bis 500 umol Übergangsmetall/g Feststoff.

In dem Metallkomplex (A)

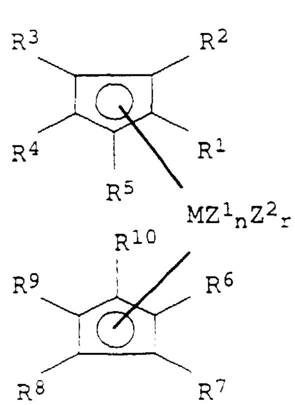

(A)

steht M für ein Metall der IV. bis VIII. Nebengruppe (IVB bis VIIIB) oder der Lanthanidenreihe des Periodensystems

der Elemente, vorzugsweise Titan, Zirkonium, Hafnium, Vanadium, Niob, Tantal, Chrom, Molybdän, Wolfram, Mangan, Eisen, Ruthenium, Osmium, Cobalt oder Nickel und ganz besonders bevorzugt Titan, Zirkonium, Hafnium, oder Chrom.

$R^1$ bis $R^{10}$ bedeuten Wasserstoff, $C_1$- bis $C_{10}$-Alkyl, 5- bis 7-gliedriges Cycloalkyl, das seinerseits $C_1$- bis $C_6$-Alkylgruppen als Substituenten tragen kann, $C_6$- bis $C_{15}$-Aryl oder Arylalkyl und wobei gegebenenfalls auch zwei benachbarte Reste gemeinsam für 4 bis 15 C-Atome aufweisende cyclische Gruppen stehen können (Ringannelierung), oder $Si(R^{11})_3$, mit $R^{11}$ $C_1$- bis $C_{10}$-Alkyl, $C_6$- bis $C_{15}$-Aryl oder $C_3$- bis $C_{10}$-Cycloalkyl, oder wobei die Reste $R^4$ und $R^9$ gemeinsam eine Gruppierung $[Y(R^{12}R^{13}]_m$- bilden, mit Y Silicium, Germanium, Zinn oder Kohlenstoff $R^{12}$, $R^{13}$ Wasserstoff, $C_1$- bis $C_{10}$-Alkyl, $C_3$- bis $C_{10}$-Cycloalkyl oder $C_6$- bis $C_{15}$-Aryl.

Vorzugsweise bedeuten $R^1$ bis $R^{10}$ Wasserstoff, Methyl, Ethyl, n-Propyl, iso-Propyl, n-Butyl, tert.-Butyl anneliertes 6- oder 7-gliedriges Kohlenstoff-Ringsystem und/oder ein Brückenglied - $[Y(R^{12}R^{13})]_m$-. Insbesondere stehen $R^1$ bis $R^{10}$ für Wasserstoff, Methyl, n-Butyl oder anneliertes 6-gliedriges Ringsystem (Indenyltyp-Ligand) und/oder ein Brückenglied -$[Y(R^{12}R^{13})]_m$-. Bevorzugte Brückenglieder $[Y(R^{12}R^{13})j_m$- sind solche mit Y Kohlenstoff, Silizium; $R^{12}$, $R^{13}$ bedeuten dann Wasserstoff, Methyl, Ethyl, n-Propyl, iso-Propyl, n-Butyl, tert.-Butyl oder Phenyl und m ist vorzugsweise 1 oder 2.

$Z^1$, $Z^2$ in (A) bedeutet Fluor, Chlor, Brom, Iod, Wasserstoff, $C_1$- bis $C_{20}$-Alkyl oder Arylreste, vorzugsweise $C_1$- bis $C_{20}$-aliphatische, $C_3$- bis $C_{10}$-cycloaliphatische Reste, $C_6$- bis $C_{15}$-aromatische Reste oder Aralkylreste mit 6 bis 15 Kohlenstoffatomen im Arylrest und 1 bis 10 Kohlenstoffatomen im Alkylrest. Beispielsweise seien genannt Methyl, Ethyl, n-Propyl, i-Propyl, n-Butyl, sec.-Butyl, tert.-Butyl, iso-Butyl, Cyclopentyl, Cyclohexyl, Phenyl, Tolyl, Benzyl.

Weiterhin bedeuten $Z^1$, $Z^2$ Alkoholat (-$OR^{14}$), Carboxylat (-$OOCR^{14}$), Aldolat

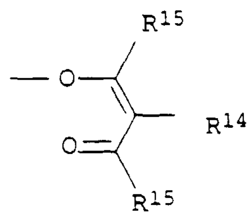

oder Derivate des Cyclopentadienylrestes

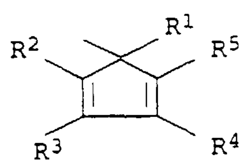

,

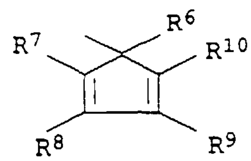

mit der vorher für $R^1$ bis $R^{10}$ spezifizierten Bedeutung.

$R^{14}$, $R^{15}$ bedeuten Wasserstoff, $C_1$- bis $C_{20}$-Alkyl, vorzugsweise Methyl, Ethyl, iso-Propyl oder tert.-Butyl.

Vorzugsweise bedeutet $Z^1$, $Z^2$ in (A) Wasserstoff, Chlor, Methyl, Phenyl, insbesondere Chlor.

Der Index m in (A) steht für 1,2,3 oder 4, vorzugsweise für 1 oder 2 und insbesondere für 1. Eine ganz bevorzugte Brücke ist die Dimethylsilylgruppe.

Die Indices n oder r in (A) stehen für 0, 1 oder 2, wobei die Summe n + r ebenfalls 0, 1 oder 2 ist. Vorzugsweise ist n oder r 0, 1 oder 2 und die Summe n + r ist vorzugsweise 0 oder 2.

Gut geeignete Verbindungen der allgemeinen Formel (A) sind Komplexe mit unsubstituierten oder substituierten Bis-Cylopentadienyl- oder Bis-Indenylliganden, sowie Komplexe mit verbrückten substituierten oder unsubstituierten Indenylliganden, wie sie beispielsweise in DE-C 43 44 672 beschrieben werden.

Beispiele für bevorzugte Metallocenkomplexe der allgemeinen Formel (A) sind Dimethylsilyl-bis-(2-methylbenzindenyl)zirkoniumdichlorid, Bis-(cyclopentadienyl)zirkoniumdichlorid, Bis-(pentamethylcyclopentadienyl)zirkoniumdichlorid, Bis-(n-butylcyclopentadienyl)zirkoniumdichlorid, Bis-(cyclopentadienyl)chrom, Bis-(pentamethylcyclopentadienyl)chrom, Bis-(indenyl)chrom, Bis-(fluorenyl)chrom.

Insbesondere verwendet man als Verbindungen (A) Dimethylsilylbis-(2-methylbenzindenyl)zirkoniumdichlorid, Bis-(pentamethylcyclopentadienyl)zirkoniumdichlorid oder Bis-(cyclopentadienyl)chrom.

Die Katalysatorkomponenten I) und II) sind im allgemeinen beliebig wählbar, bevorzugt sind jedoch Katalysatorsysteme, deren Einzelkomponenten I) und II) sich in ihrem Copolymerisationsverhalten gegenüber einem Monomerengemisch Ethylen/Comonomer unterscheiden.

Das Copolymerisationsverhalten kann durch die Gleichung

$$R = (b - 1)/a$$

beschrieben werden, wobei b das molare Verhältnis der abgeleiteten Struktureinheiten (Ethylen:Comonomer) im Copolymeren und a das molare Verhältnis von Ethylen zu Comonomer in der Monomerenmischung im Reaktor bedeuten.

Gut geeignete Kombinationen I) und II) sind im allgemeinen solche, deren R-Werte der Einzelkomponente sich um einen Faktor von 2 oder mehr unterscheiden, insbesondere solche deren R-Werte sich um einen Faktor 4 oder mehr unterscheiden.

Die erfindungsgemäßen Polymerisate können durch Homo-Polymerisation von Ethylen oder durch Copolymerisation von Ethylen mit einem oder mehreren anderen Monomeren in Gegenwart der Katalysatorkomponenten I), II) und gegebenenfalls III) erhalten werden.

Als Comonomere kommen üblicherweise $C_3$- bis $C_{15}$-Alk-1-ene in Betracht, zum Beispiel Propen, 1-Buten, 1-Penten, 1-Hexen, 4-Methyl-1-penten, 1-Octen, 1-Decen, 1-Dodecen oder 1-Pentadecen. Vorzugsweise verwendet man 1-Buten, 1-Hexen oder 1-Octen und insbesondere 1-Hexen.

Der chemisch gebundene Comonomeranteil der Copolymeren liegt im allgemeinen im Bereich von 0,1 bis 2 Mol.-%, vorzugsweise von 0,3 bis 1,5 Mol.-%, bezogen auf das Copolymere.

Die Polymerisationen können in den üblichen für die Polymerisation von Olefinen bekannten Verfahren, wie Lösungsverfahren, Suspensionsverfahren, gerührte Gasphase oder Gasphasenwirbelschichtverfahren, kontinuierlich oder auch diskontinuierlich durchgeführt werden. Als Lösungsmittel oder Suspensionsmittel können inerte Kohlenwasserstoffe, wie iso-Butan, oder aber die Monomeren selbst verwendet werden.

Der Druck beträgt im allgemeinen 100 bis 10000 kPa, vorzugsweise 1000 bis 6000 kPa und die Temperatur liegt im allgemeinen im Bereich von 10 bis 150°C, vorzugsweise im Bereich von 30 bis 125°C.

Besonders gut geeignete Verfahren zur Herstellung der erfindungsgemäßen Polymeren sind das Suspensionsverfahren und das Gasphasenwirbelschichtverfahren. Die besondere Katalysatorzusammensetzung ermöglicht es die erfindungsgemäßen Polymerisate aus einem einzigen Reaktor zu erhalten.

Die Katalysatorkomponenten I) und II) können, bevor sie mit dem Monomeren in Berührung kommen, vermischt werden und dann gemeinsam in den Reaktor dosiert werden, oder sie können getrennt voneinander zum Beispiel an mehreren Stellen in den Reaktor dosiert werden.

Die Polymerisation kann vorteilhaft in Gegenwart einer Organometallkomponente III), ausgewählt aus den Gruppen IA, IIA, IIB und IIIA des Periodensystems der Elemente, durchgeführt werden. Geeignete Verbindungen III) sind beispielsweise Lithium-, Bor-, Zink- oder Aluminium-$C_1$- bis $C_{10}$-Alkyle oder -alkylhydride, oder auch $C_1$- bis $C_4$-Alkylaluminoxane, die beispielsweise in EP-A 284 708 beschrieben werden. Sehr gut geeignete Verbindungen dieser Art sind zum Beispiel n-Butyllithium, Triethylbor, Tris(pentfluorophenyl)bor, Triethylaluminium, Trihexylaluminium, Diisobutylaluminiumhydrid, Methylaluminoxan. Verwendet man als Komponente II) Bis-Cyclopentadienyl)chrom oder dessen substituierte Cyclopentadienylderivate, so empfiehlt sich besonders n-Butyllithium als Komponente III).

Das molare Verhältnis von Organometallkomponente III) zu Übergangsmetall beträgt im allgemeinen 1000:1 bis 0,01:1, vorzugsweise 500:1 bis 1:1.

Als Molmassenregler wird im allgemeinen Wasserstoff verwendet, vorzugsweise bei der Verwendung von Komponenten II), die Metalle der Gruppe IVB oder VIB wie Zirkonium oder Chrom enthalten. In Abwesenheit von Wasserstoff kann die Molmasse der Polymeren durch die Variation der Reaktionstemperatur beeinflusst werden.

Die erfindungsgemäßen Polymerisate zeichnen sich durch ihre hohe Spannungsrißbeständigkeit bei gleichzeitiger hoher Steifigkeit (Dichte) aus. Sie sind für die Herstellung von Teilen, die eine hohe Spannungsrißbeständigkeit und Steifigkeit aufweisen müssen, insbesondere Druckrohre für Gas oder Wasser, gut geeignet. Weiterhin können sie vorteilhaft zur Rohrbeschichtung und für die Herstellung von Kabelummantelungen verwendet werden.

Beispiele

Katalysatorherstellung

Beispiel 1

Komponente I

Zu einer Suspension von 1,5 kg eines Kieselgels (SD 32 16 Firma Grace) in 8 l Wasser wurden 116,5 g Chromtrinitrat-Nonahydrat (0,29 mol) und 37,5 g Diammoniumhexafluorosilicat (0,21 mol) hinzugefügt und die Mischung eine Stunde bei 25°C gerührt. Anschließend wurde das Wasser bei 100°C im Vakuum entfernt und der Feststoff bei 550°C im Luftstrom zwei Stunden lang behandelt.

Komponente IIa) (chromhaltig)

Allgemeine Vorschrift

Kieselgel (SG 332 Firma Grace) wurde sechs Stunden lang bei 800°C im Argongasstrom calciniert und dann mit Bis-(cyclopentadienyl)chrom (Chromocen) in drei unterschiedlichen Varianten A bis C (s.u.) in Berührung gebracht.

Variante A

Zu einer Suspension aus 60 g calciniertem Kieselgel in 500 ml Heptan gab man 4 g (0,02mol) Bis-(cyclopentadienyl)chrom und entfernte anschließend das Lösungsmittel. Chromgehalt des Feststoffs:1,9 Gew.-%.

Variante B

60 g calciniertes Kieselgel wurden mit 4 g (0,02 mol) Bis-(cyclopentadienyl)chrom trocken gemischt, dann wurde der Druck im Reaktionsgefäß auf 0,01 kPa vermindert und zwei Stunden aufrechterhalten wobei sich das Bis-(cyclopentadienyl)chrom auf dem Kieselgel abschied. Chromgehalt des Feststoffs:1,9 Gew.-%.

Variante C

Es wurde wie bei Variante B gearbeitet, jedoch wurde der erhaltene Katalysatorfeststoff 2,5 Stunden auf 80°C erwärmt. Chromgehalt des Feststoffs:1,9 Gew.-%.

Komponente IIb) (zirkoniumhaltig)

1,19 g (0,0021 mol) rac-Dimethylsilandiyl-bis-(2-methylbenzindenyl)zirkoniumdichlorid wurden in 538,5 ml einer 1,53 molaren Lösung von Methylaluminoxan in Toluol (0,82 mol) bei Raumtemperatur gelöst. In diese Lösung wurden 100 g eines bei 800°C im Argonstrom calcinierten Kieselgels SG 332 (25 bis 40µm) der Firma Grace langsam eingetragen und anschließend das Lösungsmittel verdampft.

Polymerisationen

Beispiele 2 und 3 (Ethylen/1-Hexen-Copolymerisation)

Die Polymerisationen wurden in einem 180 l Phillips-SuspensionsSchleifenreaktor in iso-Butan als Suspensionsmittel durchgeführt. Die Katalysatorkomponenten I) und IIa) (Beispiel 1) wurden aus zwei unterschiedlichen Dosierstellen zugegeben. Die Katalysatorkomponente IIa) wurde nach Beispiel 1, Variante B hergestellt. Es wurde in Gegenwart von n-Butyllithium (0,063 molar in Heptan) als Komponente III) und mit Wasserstoff als Molmassenregler gearbeitet. Monomere, Cokatalysator, und Suspensionsmittel wurden vorgelegt und die Polymerisation durch Dosieren der Katalysatorkomponenten I) und IIa) gestartet und dann kontinuierlich betrieben. Das Polymere wurde anschließen mit einem Extruder granuliert. Die Verfahrensparameter sind in Tabelle 1, die Produkteigenschaften in Tabelle 2 aufgeführt.

Tabelle 1:

| Verfahrensparameter | | |
|---|---|---|
| Beispiel | 2 | 3 |
| Wasserstoff [Vol.-%] | 0,31 | 0,57 |
| Ethylen [Vol-%] | 18,1 | 12,8 |
| 1-Hexen [Vol.-%] | 2,0 | 1,3 |
| Reaktionstemp. [°C] | 97,6 | 97,5 |
| n-Butyllithium [g/h] | 0,31 | 0,31 |

Tabelle 1: (fortgesetzt)

| Verfahrensparameter | | |
|---|---|---|
| Beispiel | 2 | 3 |
| Produktivität [g/g][a)] | 5600 | 5000 |

[a)] g Polymer/g Katalysatorfeststoff

Tabelle 2:

| Polymereigenschaften | | |
|---|---|---|
| Beispiel | 2 | 3 |
| Dichte [$g/cm^3$][b)] | 0,9476 | 0,9467 |
| MFR [g/10 min][c)] | 5,6 | 6,7 |
| ESCR [h][d)] | > 200 | > 200 |

[b)] bestimmt nach DIN 53479

[c)] Melt Flow Rate bei 190°C und 21,6 kg Auflagegewicht, bestimmt nach DIN 53735

[d)] Enviromental Stress Crack Resistance (Spannungsrißbeständigkeit), bestimmt nach BASF-eigener Methode. Hierbei wird das Polymere zu einer 1 mm starken Platte gepreßt aus welcher Scheiben mit einem Durchmesser von 38 mm ausgestanzt werden. Diese Scheiben werden mit einer 200 µm tiefen, 2 cm langen Kerbe einseitig versehen. Die Platten werden in eine 50°C warme, 5 %ige Tensid-Lösung (Lutensol® FSA) getaucht und mit 3 bar Druck einseitig belastet. Die Zeit von der Druckbelegung bis zum Bruch des Plättchens wird gemessen. Aus fünf Messungen wird das arithmetische Mittel gebildet.

Vergleichsbeispiel

Es wurde die ESCR eines Ethylen/1-Hexen-Copolymeren (0,004 mol-% vom 1-Hexen abgeleitete Einheiten, D = 0,9465 $g/cm^3$), erhalten mit einem herkömmlichen Phillipskatalysator nach DE-A 25 40 279 (Beispiel), gemessen. Sie betrug 118 h.

Die erfindungsgemäßem Polymeren nach Beispiel 2 und 3 haben eine höhere Spannungsrissbeständigkeit bei mindestens so hoher Dichte wie das Polymere des Vergleichsversuchs.

Beispiele 4 und 5

Allgemeines

In einem 1 l-Autoklav wurden 500 ml Isobutan, 5 ml 1-Hexen (0,04 mol) und 20 mg n-Butyllithium (0,063 molar in Heptan) vorgelegt. Der Autoklaveninhalt wurde auf 80°C aufgeheizt, der Druck mit Ethylen auf 4000 kPa erhöht und jeweils 40 mg des Katalysatorfeststoffs I) und IIb) dosiert und die Polymerisation 90 min lang durchgeführt.

Beispiel 4

Hier wurde zunächst die Katalysatorkomponente I) und dann die Komponente IIb) (Beispiel 1) dosiert. Man erhielt 104 g Polymerisat entsprechend einer Produktivität von 1300 g Polymer/g Katalysatorfeststoff. Die Dichte des Polymers betrug 0,935 $g/cm^3$ und der MFR (190°C/ 21,6 kg) war 0,0 g/10 min.

Beispiel 5

Man arbeitete analog Beispiel 4 jedoch dosierte man zuerst die Komponente IIb) und dann I). Man erhielt 123 g Polymerisat entsprechend einer Produktivität von 1540 g Polymer/g Katalysatorfeststoff. Die Dichte des Polymers betrug 0,9280 $g/cm^3$ und der MFR (190°C/ 21,6 kg) war 0,0 g/10 min.

**Patentansprüche**

1. Polymerisate des Ethylens, erhältlich durch Polymerisation von Ethylen und gegebenenfalls weiterer Comonomerer in Gegenwart eines Katalysatorsystems enthaltend als aktive Bestandteile

I) einen Phillips-Katalysator,

II) einen von I) unterschiedlichen Feststoff, enthaltend eine Komponente, die von den Metallocenkomplexen der allgemeinen Formel (A) abgeleitet ist, in welcher die Substituenten und Indizes die folgende Bedeutung haben:

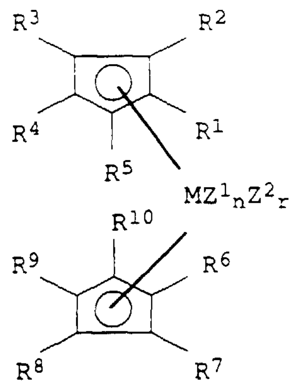

(A)

| | |
|---|---|
| $R^1$ bis $R^{10}$ | Wasserstoff, $C_1$- bis $C_{10}$-Alkyl, 5- bis 7-gliedriges Cycloalkyl, das seinerseits $C_1$- bis $C_6$-Alkylgruppen als Substituenten tragen kann, $C_6$- bis $C_{15}$-Aryl oder Arylalkyl und wobei gegebenenfalls auch zwei benachbarte Reste gemeinsam für 4 bis 15 C-Atome aufweisende cyclische Gruppen stehen können, oder $Si(R^{11})_3$, |
| mit $R^{11}$ | $C_1$- bis $C_{10}$-Alkyl, $C_6$- bis $C_{15}$-Aryl oder $C_3$- bis $C_{10}$-Cycloalkyl, |

oder wobei die Reste $R^4$ und $R^9$ gemeinsam eine Gruppierung - $[Y(R^{12}R^{13}]_m$- bilden,

| | |
|---|---|
| mit Y $R^{12}$, $R^{13}$ | Silicium, Germanium, Zinn oder Kohlenstoff Wasserstoff, $C_1$- bis $C_{10}$-Alkyl, $C_3$- bis $C_{10}$-cycloalkyl oder $C_6$- bis $C_{15}$-Aryl |
| M | für ein Metall der IV. bis VIII. Nebengruppe oder ein Metall der Lanthanidenreihe steht, |
| $Z^1$, $Z^2$ | Fluor, Chlor, Brom, Jod, Wasserstoff, $C_1$- bis $C_{20}$-Alkyl- oder Arylrest, $-OR^{14}$, $-OOCR^{14}$, |

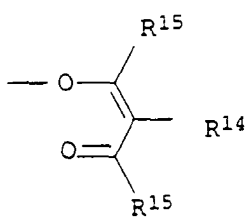

,

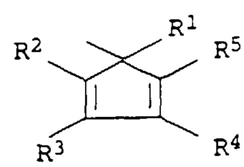

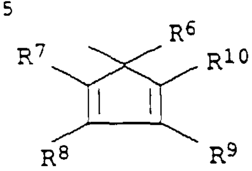

oder bedeutet,

| | |
|---|---|
| mit $R^{14}$ | Wasserstoff oder $C_1$- bis $C_{20}$-Alkyl, |
| $R^{15}$ | $C_1$- bis $C_{20}$-Alkyl, |
| m | 1,2,3 oder 4 |
| n | 0,1 oder 2 |
| r | 0, 1 oder 2, |

wobei die Summe n + r ebenfalls 0,1 oder 2 ist,
und gegebenenfalls

III) eine Organometallkomponente ausgewählt aus den Gruppen IA, IIA, IIB und IIIA des Periodensystems der Elemente.

**2.** Polymerisate des Ethylens nach Anspruch 1, wobei M in (A) für Zirkonium oder Chrom steht.

**3.** Polymerisate des Ethylens nach den Ansprüchen 1 bis 2, wobei die Polymerisate eine Dichte im Bereich von 0,925 bis 0,965 g/$cm^3$ haben.

**4.** Polymerisate des Ethylens nach den Ansprüchen 1 bis 3, enthaltend als Comonomere $C_3$- bis $C_{15}$-Alk-1-ene.

**5.** Katalysatorsysteme enthaltend als aktive Bestandteile

I) einen Phillips-Katalysator
II) einen von (I) unterschiedlichen Feststoff, enthaltend eine Komponente, die von den Metallocenkomplexen der allgemeinen Formel (A) abgeleitet ist, in welcher die Substituenten und Indizes die folgende Bedeutung haben:

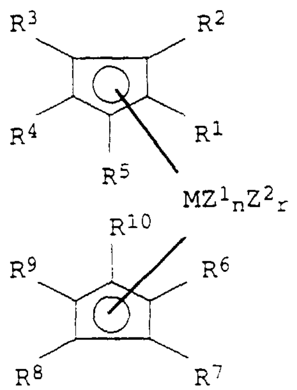

(A)

| | |
|---|---|
| $R^1$ bis $R^{10}$ | Wasserstoff, $C_1$- bis $C_{10}$-Alkyl, 5- bis 7-gliedriges Cycloalkyl, das seinerseits $C_1$- bis $C_6$-Alkylgruppen als Substituenten tragen kann, $C_6$- bis $C_{15}$-Aryl oder Arylalkyl und wobei gegebenenfalls auch zwei benachbarte Reste gemeinsam für 4 bis 15 C-Atome aufweisende cyclische Gruppen stehen können, oder $Si(R^{11})_3$, |
| mit $R^{11}$ | $C_1$- bis $C_{10}$-Alkyl, $C_6$- bis $C_{15}$-Aryl oder $C_3$- bis $C_{10}$-Cycloalkyl, |

oder wobei die Reste $R^4$ und $R^9$ gemeinsam eine Gruppierung $-[Y(R^{12}R^{13}]_m-$ bilden,

| | |
|---|---|
| mit Y $R^{12}$, $R^{13}$ | Silicium, Germanium, Zinn oder Kohlenstoff Wasserstoff, $C_1$- bis $C_{10}$-Alkyl, $C_3$- bis $C_{10}$-Cycloalkyl oder $C_6$- bis $C_{15}$-Aryl |
| M | für ein Metall der IV. bis VIII. Nebengruppe oder ein Metall der Lanthanidenreihe steht, |
| $Z^1$, $Z^2$ | Fluor, Chlor, Brom, Jod, Wasserstoff, $C_1$- bis $C_{20}$-Alkyl- oder Arylrest, $-OR^{14}$, $-OOCR^{14}$, |

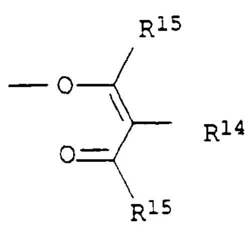

,

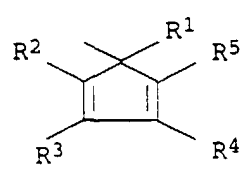

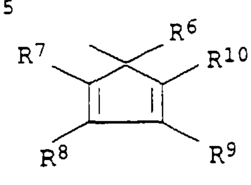

oder bedeutet,

mit $R^{14}$ Wasserstoff oder $C_1$- bis $C_{20}$-Alkyl,
$R^{15}$ $C_1$- bis $C_{20}$-Alkyl,
m 1,2,3 oder 4
n 0,1 oder 2
r 0, 1 oder 2,

wobei die Summe n + r ebenfalls 0,1 oder 2 ist,
und gegebenenfalls
III) eine Organometallkomponente ausgewählt aus den Gruppen IA, IIA, IIB und IIIA des Periodensystems der Elemente.

**6.** Katalysatorsysteme nach Anspruch 5, wobei M in (A) für Zirkonium oder Chrom steht.

**7.** Katalysatorsysteme nach Anspruch 5, wobei (A) für Zirkoniumkomplexe mit verbrückten, substituierten oder unsubstituierten Indenylliganden steht.

**8.** Verfahren zur Herstellung von Polymerisaten des Ethylens durch Polymerisation von Ethylen und gegebenenfalls weiterer Comonomerer in Gegenwart eines Katalysatorsystems gemäß Anspruch 5.

**9.** Verwendung der Polymerisate gemäß den Ansprüchen 1 bis 4 zur Herstellung von Folien, Formkörpern, und Fasern.

**10.** Folien, Formkörper und Fasern aus den Polymerisaten gemäß der Ansprüche 1 bis 4.

**Claims**

**1.** A polymer of ethylene obtainable by polymerization of ethylene and, if desired, further comonomers in the presence of a catalyst system comprising as active constituents

I) a Phillips catalyst,

II) a solid which is different from I) and comprises a component which is derived from the metallocene complexes of the formula (A) in which the substituents and indices have the following meanings:

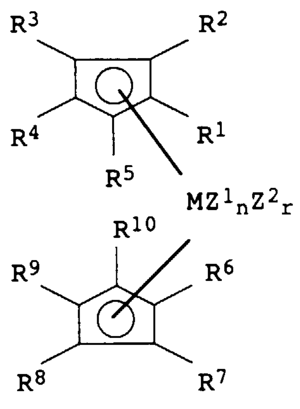

(A)

$R^1$ to $R^{10}$ are hydrogen, $C_1$-$C_{10}$-alkyl, 5- to 7-membered cycloalkyl which may in turn bear $C_1$-$C_6$-alkyl groups as substituents, $C_6$-$C_{15}$-aryl or arylalkyl, where two adjacent radicals may also together form a cyclic group having from 4 to 15 carbon atoms, or $Si(R^{11})_3$,
where $R^{11}$ is $C_1$-$C_{10}$-alkyl, $C_6$-$C_{15}$-aryl or $C_3$-$C_{10}$-cycloalkyl,

or the radicals $R^4$ and $R^9$ together form a group $[Y(R^{12}R^{13}]_m$-,

| | |
|---|---|
| where Y | is silicon, germanium, tin or carbon |
| $R^{12}$, $R^{13}$ | are hydrogen, $C_1$-$C_{10}$-alkyl, $C_3$-$C_{10}$-cycloalkyl or $C_6$-$C_{15}$-aryl |
| M | is a metal of transition groups IV to VIII or a metal of the lanthanide series, |
| $Z^1$, $Z^2$ | are fluorine, chlorine, bromine, iodine, hydrogen, $C_1$-$C_{20}$-alkyl or aryl, $-OR^{14}$, $-OOCR^{14}$, |

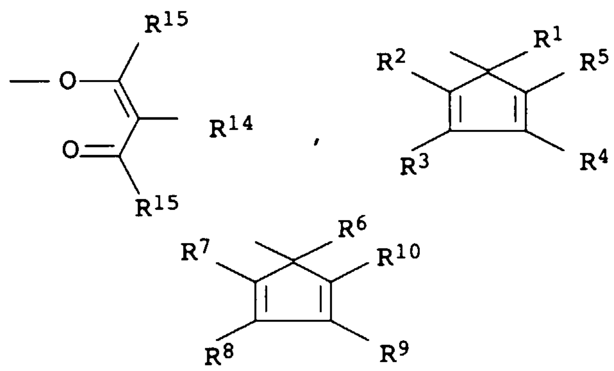

,

or

| | |
|---|---|
| where $R^{14}$ | is hydrogen or $C_1$-$C_{20}$-alkyl, |
| $R^{15}$ | is $C_1$-$C_{20}$-alkyl, |
| m | 1, 2, 3 or 4 |
| n | 0, 1 or 2 |
| r | 0, 1 or 2, |

where the sum n + r is likewise 0, 1 or 2,
and, if desired,

III) an organometallic component selected from groups IA, IIA, IIB and IIIA of the Periodic Table of the Elements.

**2.** A polymer of ethylene as claimed in claim 1, wherein M in (A) is zirconium or chromium.

**3.** A polymer of ethylene as claimed in claim 1 or 2 which has a density in the range from 0.925 to 0.965 g/cm$^3$.

**4.** A polymer of ethylene as claimed in any of claims 1 to 3 comprising $C_3$-$C_{15}$-alk-1-enes as comonomers.

**5.** A catalyst system comprising as active constituents

I) a Phillips catalyst,

II) a solid which is different from I) and comprises a component which is derived from the metallocene complexes of the formula (A) in which the substituents and indices have the following meanings:

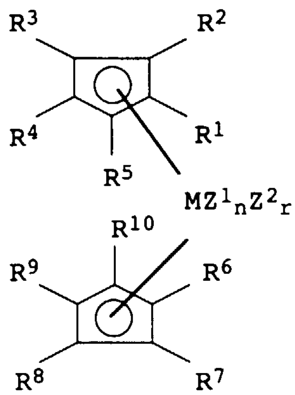

(A)

| | |
|---|---|
| $R^1$ to $R^{10}$ | are hydrogen, $C_1$-$C_{10}$-alkyl, 5- to 7-membered cycloalkyl which may in turn bear $C_1$-$C_6$-alkyl groups as substituents, $C_6$-$C_{15}$-aryl or arylalkyl, where two adjacent radicals may also together form a cyclic group having from 4 to 15 carbon atoms, or $Si(R^{11})_3$, |
| where $R^{11}$ | is $C_1$-$C_{10}$-alkyl, $C_6$-$C_{15}$-aryl or $C_3$-$C_{10}$-cycloalkyl, |

or the radicals $R^4$ and $R^9$ together form a group $-(Y(R^{12}R^{13}]_m-$,

| | |
|---|---|
| where Y | is silicon, germanium, tin or carbon |
| $R^{12}$, $R^{13}$ | are hydrogen, $C_1$-$C_{10}$-alkyl, $C_3$-$C_{10}$-cycloalkyl or $C_6$-$C_{15}$-aryl |
| M | is a metal of transition groups IV to VIII or a metal of the lanthanide series, |
| $Z^1$, $Z^2$ | are fluorine, chlorine, bromine, iodine, hydrogen, $C_1$-$C_{20}$-alkyl or aryl, $-OR^{14}$, $-OOCR^{14}$, |

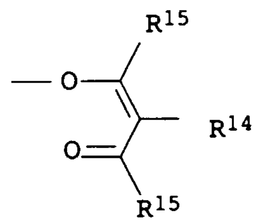

,

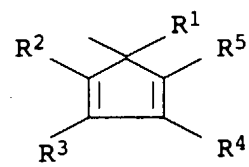

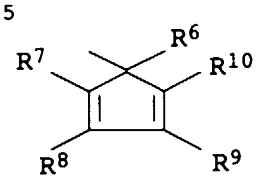

or

| | |
|---|---|
| where $R^{14}$ | is hydrogen or $C_1$-$C_{20}$-alkyl, |
| $R^{15}$ | is $C_1$-$C_{20}$-alkyl, |
| m | 1, 2, 3 or 4 |
| n | 0, 1 or 2 |
| r | 0, 1 or 2, |

where the sum n + r is likewise 0, 1 or 2,
and, if desired,

III) an organometallic component selected from groups IA, IIA, IIB and IIIA of the Periodic Table of the Elements.

**6.** A catalyst system as claimed in claim 5, wherein M in (A) is zirconium or chromium.

**7.** A catalyst system as claimed in claim 5, wherein (A) is a zirconium complex containing a bridged, substituted or

unsubstituted indenyl ligand.

**8.** A process for preparing polymers of ethylene by polymerization of ethylene and, if desired, further comonomers in the presence of a catalyst system as claimed in claim 5.

**9.** The use of a polymer as claimed in any of claims 1 to 4 for producing films, moldings and fibers.

**10.** A film, molding or fiber comprising a polymer as claimed in any of claims 1 to 4.

**Revendications**

**1.** Polymères d'éthylène, obtenus par polymérisation d'éthylène et éventuellement d'autres comonomères, en présence d'un système catalytique contenant, en tant que constituant actif:

I) Un catalyseur de Phillips,
II) Un solide différent de I), contenant un composant dérivé des complexes de métallocène de la formule générale (A), dans lequel les substituants et indices ont les significations suivantes:

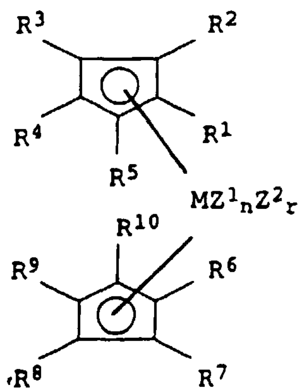

(A)

| | |
|---|---|
| $R^1$ à $R^{10}$ | représentent l'hydrogène, un radical alkyle en $C_1$ à $C_{10}$, cycloalkyle pentagonal à heptagonal, qui peut de son côté porter des radicaux alkyle en $C_1$ à $C_6$ en tant que substituants, arylalkyle ou aryle en $C_6$ à $C_{15}$, et où éventuellement deux restes voisins peuvent également représenter ensemble des groupes cycliques présentant de 4 à 15 atomes de carbone, ou bien $Si(R^{11})_3$, |
| avec $R^{11}$ | représentant un radical alkyle en $C_1$ à $C_{10}$, aryle en $C_6$ à $C_{15}$ ou cycloalkyle en $C_3$ à $C_{10}$, |

ou bien où les restes $R^4$ et $R^9$ forment ensemble un groupement $-[Y(R^{12}R^{13}]_m$.

| | |
|---|---|
| où Y | représente le silicium, le germanium, l'étain ou le carbone |
| $R^{12}$, $R^{13}$ | représentent l'hydrogène, un radical alkyle en $C_1$ à $C_{10}$, cycloalkyle en $C_3$ à $C_{10}$ ou aryle en $C_6$ à $C_{15}$, |
| M | représente un métal des sous-groupes IV à VIII ou un métal de la série des lanthanides, |
| $Z^1$, $Z^2$ | représentent le fluor, le chlore, le brome, l'iode, l'hydrogène, un radical aryle ou alkyle en $C_1$ à $C_{20}$, $-OR^{14}$, $-OOCR^{14}$, |

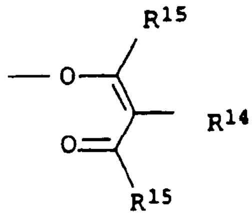

,

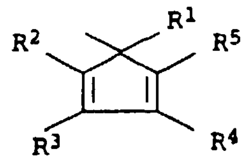

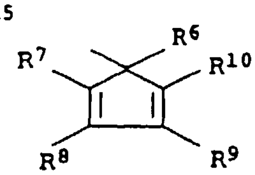

ou

avec

$R^{14}$ représentant l'hydrogène ou un radical alkyle en $C_1$ à $C_{20}$,
$R^{15}$ étant un radical alkyle en $C_1$ à $C_{20}$,
m étant égal à 1, 2, 3 ou 4,
n étant égal à 0, 1 ou 2
r étant égal à 0, 1 ou 2;

la somme n + r étant elle aussi égale à 0, 1 ou 2,
et éventuellement
III) un composé organométallique choisi parmi les groupes IA, IIA, IIB et IIIA du système périodique des éléments.

**2.** Polymères d'éthylène selon la revendication 1, où M dans (A) représente le zirconium ou le chrome.

**3.** Polymères d'éthylène selon les revendications 1 à 2, où les polymères ont une masse spécifique de 0,925 à 0,965 g.cm$^3$.

**4.** Polymères d'éthylène selon les revendications 1 à 3, contenant en tant que monomères des alc-1-ènes en $C_3$ à $C_{15}$.

**5.** Systèmes catalytiques contenant en tant que constituants actifs:

I) un catalyseur de Phillips
II) un solide différent de I), contenant un composant dérivé des complexes de métallocène de la formule générale (A), dans lequel les substituants et indices ont les significations suivantes:

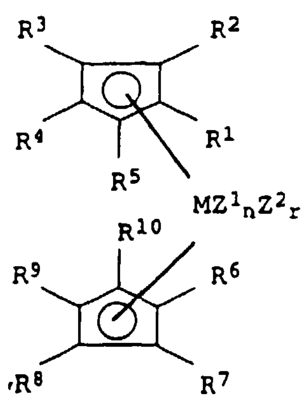

(A)

$R^1$ à $R^{10}$ représentent l'hydrogène, un radical alkyle en $C_1$ à $C_{10}$, cycloalkyle pentagonal à heptagonal, qui peut de son côté porter des radicaux alkyle en $C_1$ à $C_6$ en tant que substituants, arylalkyle ou aryle en $C_6$ à $C_{15}$, et où éventuellement deux restes voisins peuvent également représenter ensemble des groupes cycliques présentant de 4 à 15 atomes de carbone, ou bien $Si(R^{11})_3$,

avec $R^{11}$ représentant un radical alkyle en $C_1$ à $C_{10}$, aryle en $C_6$ à $C_{15}$ ou cycloalkyle en $C_3$ à $C_{10}$,

ou bien où les restes $R^4$ et $R^9$ forment ensemble un groupement $-[Y(R^{12}R^{13}]_m$,

où Y représente le silicium, le germanium, l'étain ou le carbone

$R^{12}$, $R^{13}$ représentent l'hydrogène, un radical alkyle en $C_1$ à $C_{10}$, cycloalkyle en $C_3$ à $C_{10}$ ou aryle en $C_6$ à $C_{15}$,

M représente un métal des sous-groupes IV à VIII ou un métal de la série des lanthanides,

$Z^1$, $Z^2$ représentent le fluor, le chlore, le brome, l'iode, l'hydrogène, un radical aryle ou alkyle en $C_1$ à $C_{20}$ $-OR^{14}$, $-OOCR^{14}$,

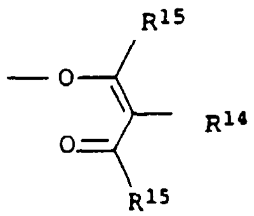

,

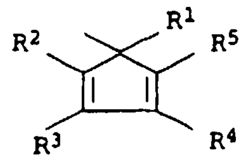

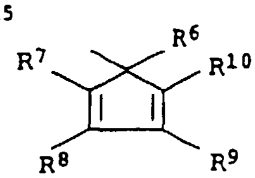

ou

avec

$R^{14}$ représentant l'hydrogène ou un radical alkyle en $C_1$ à $C_{20}$,

$R^{15}$ étant un radical alkyle en $C_1$ à $C_{20}$,

m étant égal à 1, 2, 3 ou 4,

n étant égal à 0, 1 ou 2

r étant égal à 0, 1 ou 2;

la somme n + r étant elle aussi égale à 0, 1 ou 2,

et éventuellement

III) un composé organométallique choisi parmi les groupes IA, IIA, IIB et IIIA du système périodique des éléments.

**6.** Systèmes catalytiques selon la revendication 5, où M dans (A) représente le zirconium ou le chrome.

**7.** Systèmes catalytiques selon la revendication 5, où (A) représente des complexes de zirconium avec ligands d'indényle pontés, substitués ou non substitués.

**8.** Procédé de préparation de polymères d'éthylène par polymérisation d'éthylène et éventuellement d'autres comonomères, en présence d'un système catalytique selon la revendication 5.

**9.** Utilisation des polymères selon les revendications 1 à 4 pour la préparation de feuilles, de corps façonnés et de fibres.

**10.** Feuilles, corps façonnés et fibres en polymères selon les revendications 1 à 4.